# EUROPÄISCHE PATENTSCHRIFT

(11) **EP 3 344 864 B1**
(45) Veröffentlichungstag und Bekanntmachung des Hinweises auf die Patenterteilung: **20.11.2024**
(21) Anmeldenummer: 16766254.3
(22) Anmeldetag: 05.09.2016
(51) Int. Cl.: F02D 41/02, F01N 3/20, F02D 41/04, F02B 39/10, F02D 41/00

(54) **BRENNKRAFTMASCHINE**
INTERNAL COMBUSTION ENGINE
MOTEUR À COMBUSTION INTERNE

(30) Priorität: 04.09.2015 AT 507562015
(43) Veröffentlichungstag der Anmeldung: 11.07.2018
(73) Patentinhaber: Innio Jenbacher GmbH & Co OG, 6200 Jenbach (AT)
(72) Erfinder: HILLEN, Friedhelm, 6200 Jenbach (AT); BHUVANESWARAN, Manickam, 6240 Ratteberg (AT); SIEBERER, Manfred, 6336 Langkampfen (AT)
(74) Vertreter: Torggler & Hofmann Patentanwälte - Innsbruck
(86) Internationale Anmeldenummer: PCT/EP2016/070841
(87) Internationale Veröffentlichungsnummer: WO 2017/037286

(56) Entgegenhaltungen:
- EP-A1- 2 006 178
- EP-A1- 2 578 866
- WO-A1-2005/093235
- DE-A1- 10 139 526
- JP-A- 2008 038 736
- US-A1- 2012 117 962

## Beschreibung

Die vorliegende Erfindung betrifft Brennkraftmaschinen gemäß den Merkmalen des Oberbegriffs des Anspruchs 1 sowie ein Verfahren zum Vorbereiten eines Startvorgangs einer Brennkraftmaschine.

Die DE 10139526 A1 offenbart eine Brennkraftmaschine mit einem Turbolader, der mit einer elektrischen Maschine verbunden ist, und einem Porenbrenner.

Die EP 2006178 A1 offenbart ein Hybridfahrzeug, wobei zum Warmhalten eines Katalysators die Kurbelwelle gedreht wird und dem Katalysator Treibstoff zugeführt wird.

Die WO 2005/093235 A1 offenbart ein Fahrzeug, wobei mittels eines der Abgasturbine vorgeschalteten Katalysators und einer zusätzlichen Kraftstoffzufuhr ein Abgasmassenstrom durch die Abgasturbine erhöht wird.

Es ist demnach bekannt, zwischen den Kolben-Zylinder-Einheiten und der Abgasturbine eines Turboladers einen Katalysator anzuordnen. Insbesondere bei großvolumigen Gasmotoren hat dies den Vorteil, dass es möglich ist, die Wirkung des Turboladers zu verbessern. Denn durch die Freisetzung von chemischer Energie, welche sich nach der Verbrennung in den Kolben-Zylinder-Einheiten noch im abgeführten Stoffstrom gespeichert ist, führt zu einer höheren Temperatur des Stoffstroms und einer Expansion des Stoffstroms, welche sich in einem höheren Volumenstrom an der Abgasturbine des Turboladers niederschlägt. Der durch die Abgasturbine angetriebene Verdichter des Turboladers kann somit einen höheren Ladedruck verursachen, womit eine höhere Gesamtleistung der Brennkraftmaschine erreicht werden kann.

Es ist zu bemerken, dass die im abgeführten Stoffstrom enthaltene Enthalpie gesteigert werden kann, indem Zündzeitpunkte der Kolben-Zylinder-Einheiten geeignet verschoben werden oder indem dem Stoffstrom Brennstoff zugeführt wird.

Als Nachteil des Katalysators vor der Abgasturbine ist zu nennen, dass sich ein verschlechtertes Startverhalten ergibt. Denn die beim Start im Katalysator freigesetzte Energie wird zunächst zumindest teilweise in eine Erwärmung des Katalysators fließen, was die Zeitspanne bis zum Erreichen des Betriebspunkts der Brennkraftmaschine verlängern kann.

Aufgabe der vorliegenden Erfindung ist es, eine Brennkraftmaschine sowie ein Verfahren anzugeben, durch welche ein verbessertes Startverhalten in der Brennkraftmaschine erzielt wird.

Hinsichtlich der Brennkraftmaschine wird dies durch die Merkmale des Anspruchs 1 gelöst. Dies geschieht, indem eine Regeleinrichtung dazu ausgebildet ist, eine Fluidfördereinrichtung so zu regeln, dass die Fluidfördereinrichtung in einem Zustand der Brennkraftmaschine, in welchem keine Verbrennung und/oder Zündung in der wenigstens einen Kolben-Zylinder-Einheit stattfindet, Kraftstoff-Luft-Gemisch durch den Katalysator fördert.

Hinsichtlich des Verfahrens wird die Aufgabe durch die Merkmale des Anspruchs 13 gelöst. Dabei wird ein Katalysator der Brennkraftmaschine in einem Zustand der Brennkraftmaschine, in welchem keine Verbrennung durchgeführt wird, vorgewärmt und/oder warm gehalten, indem ein Kraftstoff-Luft-Gemisch durch den Katalysator gefördert wird.

Indem während Stillstandsphasen ein Kraftstoff-Luft-Gemisch durch den Katalysator gefördert wird, entsteht in demselben durch Freisetzung der Enthalpie des Kraftstoff-Luft-Gemisches Wärme, welche den Katalysator aufheizt. Wird dann die Brennkraftmaschine gestartet, liegt die positive Wirkung des Katalysators auf die Abgasturbine sofort vor, da weniger Energie für die Erwärmung der Umgebung (das heißt des Katalysators) verloren geht. Dadurch spricht der Turbolader schneller an, wodurch sich das Lastverhalten verbessert.

Der Begriff Lastverhalten bezieht sich auf den Teil des Startvorgangs, in welchem die Leistung der Brennkraftmaschine erhöht wird (Lastrampe), nachdem eine erwünschte Solldrehzahl erreicht worden ist.

Als rückgeführte Größen für die Regeleinrichtung werden erfindungsgemäß die Messwerte von Temperatursensoren verwendet, wobei die Temperatursensoren vor oder nach dem Katalysator oder im Katalysator angeordnet sein können. Zur weiteren Verbesserung des Regelverhaltens können motorspezifisch auch weitere Größen wie Druckverluste, Ventilöffnungen usw. im Regelmodell verarbeitet werden.

Um den durch die Brennkraftmaschine verursachten Widerstand beim Fördern des Kraftstoff-Luft-Gemisches durch den Katalysator zu vermindern, ist erfindungsgemäß eine Umgehungsleitung zur Umgehung der zumindest einen Kolben-Zylinder-Einheit vorgesehen, welche strömungsmäßig mit einer Zufuhrleitung für Luft oder Kraftstoff-Luft-Gemisch zur zumindest einen Kolben-Zylinder-Einheit und einer Verbindungsleitung zwischen der zumindest einen Kolben-Zylinder-Einheit und dem Katalysator verbunden ist.

Die Erfindung kann bevorzugt bei stationären Motoren und Marineanwendungen zum Einsatz kommen. Sie kann insbesondere bei Gasmotoren zum Einsatz kommen, welche vorzugsweise einen Generator zur Stromerzeugung antreiben (sogenannten Gensets). Die Erfindung kann bei Brennkraftmaschinen mit 8, 10, 12, 14, 16, 18, 20, 22, 24 oder mehr Zylindern zum Einsatz kommen.

Vorteilhafte Ausführungsformen der Erfindung sind in den abhängigen Ansprüchen definiert.

Die Fluidfördereinrichtung kann durch einen Verdichter des Turboladers selbst gebildet sein, in welchem Fall ein Motor zum Antrieb des Verdichters vorgesehen sein kann. Dies ist konstruktiv besonders einfach, da der Verdichter in vielen Fällen schon vorliegt und gegebenenfalls nur noch der Motor ergänzt werden muss.

Weiterhin kann es eine besonders einfache Lösung darstellen, wenn ein Abtrieb des Motors mit einer gemeinsamen Welle der Abgasturbine und des Verdichters des Turboladers verbunden ist. Der Motor kann mittels einer Kupplung oder direkt mit der Welle verbunden sein. Der Motor kann elektrisch ausgeführt sein und vorzugsweise generatorisch betreibbar sein. Dies eröffnet mehrere Möglichkeiten. Zum einen kann während des Betriebs auch durch den Turbolader selbst Strom erzeugt werden (ähnlich zum Turbo-Charger-Compound). Anderseits kann der Elektromotor dazu verwendet werden, den Ladedruck zu erhöhen, falls dies notwendig ist.

Die Fluidfördereinrichtung kann aber auch als zumindest ein Gebläse ausgebildet sein, welches vorzugsweise einem Verdichter des Turboladers vorgeschaltet und/oder der Abgasturbine nachgeschaltet ist. Damit müssen keine baulichen Veränderungen am Turbolader durchgeführt werden. Es ist zu bemerken, dass sowohl ein Gebläse, welches dem Verdichter des Turboladers vorgeschaltet ist, als auch ein Gebläse, welches der Abgasturbine nachgeschaltet ist, verwendet werden kann. Ein der Abgasturbine nachgeschaltetes Gebläse kann vorzugsweise korrosionsbeständig ausgeführt sein, da der Taupunkt des Motorabgases oft so liegt, dass Kondensationsfeuchte auftritt. Natürlich kann auch die Kombination zweier entsprechend angeordneter Gebläse vorgesehen sein.

Das Kraftstoff-Luft-Gemisch kann bevorzugt in einer, vorzugsweise gesteuerten oder geregelten Mischeinrichtung erzeugt werden.

Besonders bevorzugt kann die Mischeinrichtung strömungsmäßig zwischen der zumindest einen Kolben-Zylinder-Einheit und dem Katalysator angeordnet sein. Dadurch kann besonders einfach und gezielt die Enthalpie des durch den Katalysator geförderten Kraftstoff-Luft-Gemisches beeinflusst werden.

Natürlich kann das Kraftstoff-Luft-Gemisch auch auf andere Art und Weise erzeugt werden. Hierzu kann zum einen die Mischeinrichtung einfach diejenige sein, welche das Gemisch für die Kolben-Zylinder-Einheiten erzeugt. Eine derartige Mischeinrichtung kann so ausgebildet und angeordnet sein, dass das Gemisch vor dem Eintritt in den Verdichter bereits vorliegt (gemischaufgeladene Motoren). Aber auch gesteuerte oder geregelte Ventile an den Kolben-Zylinder-Einheiten selbst oder in einer Zufuhrleitung zu denselben können zum Einsatz kommen (luftaufgeladene Motoren).

Die Umgehungsleitung kann besonders bei Brennkraftmaschinen mit eher geringerer Anzahl von Kolben-Zylinder-Einheiten von Vorteil sein, da dann die Wahrscheinlichkeit geringer ist, dass Ein- und Auslassventile für eine Kolben-Zylinder-Einheit gleichzeitig offen sind und dadurch der Fall auftreten kann, dass durch die zumindest eine Kolben-Zylinder-Einheit kein Stoffstrom strömen kann.

Um zu verhindern, dass ein Stoffstrom während des Verbrennungsbetriebs der Brennkraftmaschine durch die Umgehungsleitung fließt, kann in der Umgehungsleitung ein Absperrventil vorgesehen sein.

In einer besonders bevorzugten Ausführungsform kann die Mischeinrichtung in der Verbindungsleitung angeordnet sein und die Verbindung der Umgehungsleitung mit der Verbindungsleitung kann strömungsmäßig vor der Mischeinrichtung angeordnet sein. Dabei kann der Beimischungsanteil an Kraftstoff zur Luft besonders gut gesteuert bzw. geregelt werden.

Es kann vorgesehen sein, dass die Regeleinrichtung die Fluidfördereinrichtung vor einem Starten oder intermittierend während der Stillstandsphasen der Brennkraftmaschine aktiviert.

Für eine besonders einfache Durchführung eines erfindungsgemäßen Verfahrens kann die steuerbare oder regelbare Mischeinrichtung mit der Regeleinrichtung verbunden sein und von dieser so gesteuert oder geregelt werden, dass die Mischeinrichtung das Kraftstoff-Luft-Gemisch herstellt, wenn die Fluidfördereinrichtung aktiviert ist.

Auch das Absperrventil kann - vorzugsweise von der Regeleinrichtung - während des Verbrennungsbetriebs geschlossen und im abgeschalteten Zustand geöffnet werden.

Der Katalysator kann über eine - vorzugsweise elektrische - Begleitheizung (auch Stillstandsheizung) verfügen. Dabei können zumindest eine Absperrklappe zum Einsatz kommen, um abkühlende Luftströmungen durch den Katalysator und den weiteren Abgastrakt zu verhindern.

Es kann auch der Einsatz von elektrisch beheizbaren Katalysatorelementen vorgesehen sein, welche quasi eine Beheizung des Katalysators "von innen" erlauben. Insbesondere zusammen mit der erfindungsgemäßen Förderung von Kraftstoff-Luft-Gemisch durch den Katalysator können dadurch auch bei stärker ausgekühlten Systemen entsprechende Temperaturen im Katalysator erreicht werden, ohne den Katalysator gleichzeitig lokal zu überhitzen.

Weitere Vorteile und Einzelheiten der Erfindung ergeben sich anhand der Figuren sowie der dazugehörigen Figurenbeschreibung. Dabei zeigen
- Fig. 1: schematisch eine erfindungsgemäße Brennkraftmaschine mit einem Verdichter eines Turboladers als Fluidfördereinrichtung und
- Fig. 2: schematisch eine erfindungsgemäße Brennkraftmaschine mit zwei Alternativen für die Anordnung eines Gebläses als Fluidfördereinrichtung.

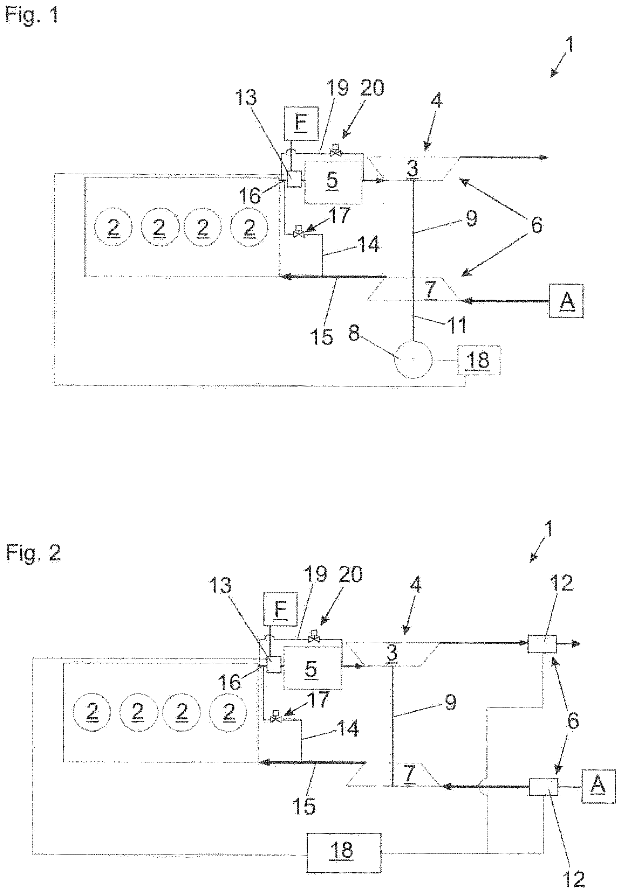

Figur 1 und Figur 2 zeigen verschiedene Ausführungsformen einer erfindungsgemäßen Brennkraftmaschine in schematischen Darstellungen. Die grundsätzliche Funktionsweise der zugrundeliegenden Brennkraftmaschine ist die gleiche. Diese grundsätzliche Funktionsweise wird im Folgenden kurz beschrieben:
Luft A (meist Umgebungsluft) wird angesaugt und in einem Verdichter 7 des Turboladers 4 verdichtet. Über die Zufuhrleitung 15 gelangen die verdichteten Massen in die Kolben-Zylinder-Einheiten 2, wobei hier rein exemplarisch jeweils vier Kolben-Zylinder-Einheiten 2 dargestellt sind. Natürlich muss für die Verbrennung in den Kolben-Zylinder-Einheiten 2 ebenfalls ein Kraftstoff-Luft-Gemisch (neben dem Kraftstoff-Luft-Gemisch, welches in einem abgeschalteten Zustand der Brennkraftmaschine durch den Katalysator gefördert wird) bereitgestellt werden. Dies kann entweder durch einen Gasmischer (nicht dargestellt), welcher dem Verdichter 7 vorgeschaltet ist, geschehen (gemischaufgeladener Motor). Oder der Gasmischer kann in der Zufuhrleitung 15 angeordnet sein (luftaufgeladene Motoren). Alternativ oder zusätzlich können gesteuerte oder geregelte Kraftstoffeinbringungsvorrichtungen direkt an den Koben-Zylinder-Einheiten 2 eingesetzt werden.

Nach der Verbrennung in den Kolben-Zylinder-Einheiten 2 wird der Stoffinhalt aus den Kolben-Zylinder-Einheiten 2 abgeführt und über eine Verbindungsleitung 16 dem Katalysator 5 zugeführt. Nach dem Durchströmen des Katalysators 5 gelangt der Stoffstrom zur Abgasturbine 3 des Turboladers 4 und tritt schließlich als Abgas aus. Die Abgasturbine 3 ist über eine gemeinsame Welle 9 mit dem Verdichter 7 des Turboladers 4 verbunden, sodass die Abgasturbine 3 den Verdichter 7 zur Erzeugung des Ladedrucks antreibt.

Die beiden dargestellten Ausführungsformen verfügen außerdem über eine Mischeinrichtung 13. Über diese Mischeinrichtung 13 wird dem durch die Fluidfördereinrichtung 6 erzeugten Luftstrom Kraftstoff F aus einem Kraftstoffreservoir (meist ein Tank) oder aus der Kraftstoffversorgung der Brennkraftmaschine (nicht dargestellt) 1 beigemengt - es entsteht das Kraftstoff-Luft-Gemisch, welches durch den Katalysator 5 gefördert wird.

Ebenfalls gemein ist beiden Darstellungen aus Figur 1 und Figur 2 die Umgehungsleitung 14, welche die Zufuhrleitung 15 mit der Verbindungsleitung 16 verbindet.

Es ist dabei auch zu bemerken, dass die Mischeinrichtung 13 nicht ausschließlich an der eingezeichneten Stelle angeordnet sein muss. Beispielsweise könnte sie auch in der Zufuhrleitung 15, in der Umgehungsleitung 14 oder dem Verdichter 7 vorgelagert angeordnet sein. Letztlich ist es auch möglich, keine separate Mischeinrichtung 13 zu verwenden. Denn es kann auch eine Vorrichtung zum Einsatz kommen, welche zur Herstellung des Brennstoff-Luft-Gemischs für die Verbrennung in den Kolben-Zylinder-Einheiten 2 dient.

In der Umgehungsleitung 14 kann bevorzugt ein Absperrventil 17 vorgesehen sein. Dieses kann während des Betriebs abgesperrt werden, sodass kein direkter Stoffstrom zwischen der Zufuhrleitung 15 und der Verbindungsleitung 16 entsteht.

In beiden Ausführungsbeispielen ist außerdem eine Katalysatorumgehungsleitung 19 vorgesehen, in welcher vorzugsweise ebenfalls ein Ventil 20 angeordnet ist.

Über die Katalysatorumgehungsleitung 19 um den Katalysator 5 und die Mischeinrichtung 13, die vor der Abgasturbine 3 des Turboladers 4 wieder einmündet, und das Ventil 20 kann zusätzlich die Temperatur im Abgasstrang nach dem Katalysator 5 geregelt werden (z.B. mittels Temperaturfühler in / nach der Zusammenführung), um Temperaturspitzen für den Turbolader und nachgeschaltete Komponenten des Abgastrakts zu vermeiden. Mit diesem System kann außerdem das Abkühlen eines etwaigen nachgeschalteten SCR vermieden oder zumindest reduziert werden. (Mit SCR, Selective Catalytic Reduction, wird ein Katalysator bezeichnet, wobei durch vorherige Beimischung eines Reduktionsmittels, meist eine wässrige Harnstofflösung, zum Abgasstoffstrom bestimmte katalytische Reaktionen zur selektiven Reduktion von bestimmten Emissionen, meist Stickoxiden, durchgeführt wird.)

In der konkreten Ausführung aus Figur 1 ist die Fluidfördereinrichtung 6 durch den Verdichter 7 in Verbindung mit dem - in diesem Fall elektrisch ausgebildeten - Motor 8 gebildet, wobei der Abtrieb 11 des Motors 8 mit der gemeinsamen Welle 9 des Turboladers 4 verbunden ist. Ist die Brennkraftmaschine 1 abgeschaltet, kann durch den mittels des Motors 8 angetriebenen Verdichter 7 zunächst Luft durch die Umgehungsleitung 14 und die Kolben-Zylinder-Einheiten 2 gefördert werden. Wie etwas weiter oben beschrieben, entsteht dann in der Mischeinrichtung 13, durch die Zugabe von Kraftstoff das Kraftstoff-Luft-Gemisch, welches durch den Katalysator 5 gefördert wird. Durch die katalytische Reaktion im Katalysator 5 entsteht Wärme, wodurch der Katalysator 5 vor dem Start der Brennkraftmaschine 1 vorgeheizt wird. Beim Start der Brennkraftmaschine kann dann die volle Enthalpie des aus den Kolben-Zylinder-Einheiten 2 abgeführten Stoffstroms zur Verbesserung der Wirkung der Abgasturbine 3 dienen.

Es ist eine Steuer- oder Regeleinrichtung 18 vorgesehen, welche einerseits mit dem Motor 8 und andererseits mit der Mischeinrichtung 13 verbunden ist. Diese Steuer- oder Regeleinrichtung 18 übernimmt die Kontrolle über den beschriebenen Aufheizvorgang. Der Übersichtlichkeit halber ist die zusätzliche Verbindung zwischen der Steuer- oder Regeleinheit 18 mit dem Absperrventil 17 und dem Ventil 20 nicht dargestellt. Die Steuer- oder Regeleinheit 18 kann das Absperrventil 17 im abgeschalteten Zustand der Brennkraftmaschine 1 öffnen, wodurch die Umgehungsleitung 14 dem beschriebenen Zweck dienen kann. Während des Betriebs kann die Steuer- oder Regeleinrichtung 18 das Absperrventil 17 dann schließen.

Die zuvor beschriebene Regelung oder Steuerung des Ventils 20 kann ebenfalls von der Regeleinrichtung 18 durchgeführt werden.

Sowohl das Absperrventil 17 als auch das Ventil 20 kann jeweils als Sperrventil, welches das Passieren eines Stoffstromes vollständig verhindert, oder als Volumenstromregelventil oder dergleichen ausgeführt sein.

Figur 2 zeigt zwei Alternativen für die Anordnung eines Gebläses 12, welches vom Turbolader 4 separat ausgeführt ist. In diesem Fall bildet das Gebläse 12 die Fluidfördereinrichtung 6, weshalb das Gebläse hierfür mit der Steuer- oder Regeleinrichtung 18 verbunden ist.

Neben der Anordnung strömungsmäßig vor dem Verdichter 7 oder nach der Abgasturbine 3 kann natürlich auch eine Ausführungsform mit zwei Gebläsen 12 verwendet werden, welche, wie in Figur 2 dargestellt, angeordnet sind.

Auch eine Anordnung eines Gebläses 12 in der Zufuhrleitung 15 und/oder der Verbindungsleitung 16 ist natürlich grundsätzlich möglich. Schließlich kann auch eine Kombination des Verdichters 7 und eines Gebläses 12 oder mehrerer Gebläse 12 als Fluidfördereinrichtung 6 verwendet werden.

Ein weiterer Vorteil einer erfindungsgemäßen Fluidfördereinrichtung zur Förderung von Kraftstoff-Luft-Gemisch durch den Katalysator 5 besteht darin, dass im abgeschalteten Zustand der Brennkraftmaschine 1 der Abgastrakt von Kraftstoff-Luft-Gemisch freigepumpt werden kann (sogenanntes "purging"). Dies kann nach einem normalen Betriebsstopp der Brennkraftmaschine 1 oder nach einem fehlgeschlagenen Startversuch erfolgen.

## Patentansprüche

1. Brennkraftmaschine mit
- zumindest einer Kolben-Zylinder-Einheit (2),
- einem eine Abgasturbine (3) aufweisenden Turbolader (4)
- einem Katalysator (5), welcher zwischen die zumindest eine Kolben-Zylinder-Einheit (2) und die Abgasturbine (3) geschaltet ist, und
- einer Regeleinrichtung (18),
wobei die Regeleinrichtung dazu ausgebildet ist, eine Fluidfördereinrichtung (6) so zu regeln, dass die Fluidfördereinrichtung in einem Zustand der Brennkraftmaschine (1), in welchem keine Verbrennung und/oder Zündung in der wenigstens einen Kolben-Zylinder-Einheit (2) stattfindet, Kraftstoff-Luft-Gemisch durch den Katalysator (5) fördert, **dadurch gekennzeichnet, dass**
- ein Temperatursensor vor, nach oder im Katalysator (5) angeordnet ist, wobei die Regeleinrichtung (18) dazu ausgebildet ist, die Messwerte des Temperatursensors als rückgeführte Größen zu verwenden, und
- eine Umgehungsleitung (14) zur Umgehung der zumindest einen Kolben-Zylinder-Einheit (2) vorgesehen ist, welche Umgehungsleitung (14) strömungsmäßig mit einer Zufuhrleitung (15) für Luft oder Kraftstoff-Luft-Gemisch zur zumindest einen Kolben-Zylinder-Einheit (2) und einer Verbindungsleitung (16) zwischen der zumindest einen Kolben-Zylinder-Einheit (2) und dem Katalysator (5) verbunden ist.

2. Brennkraftmaschine nach Anspruch 1, **dadurch gekennzeichnet, dass** die Fluidfördereinrichtung (6) als ein Verdichter (7) des Turboladers (4) ausgebildet ist, wobei ein Motor (8) zum Antrieb des Verdichters (7) vorgesehen ist.

3. Brennkraftmaschine nach Anspruch 2, **dadurch gekennzeichnet, dass** ein Abtrieb (11) des Motors (8) mit einer gemeinsamen Welle (9) der Abgasturbine (3) und des Verdichters (7) des Turboladers (4) verbunden ist.

4. Brennkraftmaschine nach Anspruch 2 oder 3, **dadurch gekennzeichnet, dass** der Motor (8) elektrisch ausgeführt ist und vorzugsweise generatorisch betreibbar ist.

5. Brennkraftmaschine nach einem der Ansprüche 1 bis 4, **dadurch gekennzeichnet, dass** die Fluidfördereinrichtung (6) als zumindest ein Gebläse (12) ausgebildet ist, welches vorzugsweise einem Verdichter (7) des Turboladers (4) vorgeschaltet und/oder der Abgasturbine (3) nachgeschaltet ist.

6. Brennkraftmaschine nach einem der Ansprüche 1 bis 5, **dadurch gekennzeichnet, dass** eine - vorzugsweise steuerbare oder regelbare - Mischeinrichtung (13) vorgesehen ist, mittels welcher das Kraftstoff-Luft-Gemisch herstellbar ist.

7. Brennkraftmaschine nach Anspruch 6, **dadurch gekennzeichnet, dass** die Mischeinrichtung (13) strömungsmäßig zwischen der zumindest einen Kolben-Zylinder-Einheit (2) und dem Katalysator (5) angeordnet ist.

8. Brennkraftmaschine nach Anspruch 6 oder 7, **dadurch gekennzeichnet, dass** die steuerbare oder regelbare Mischeinrichtung (13) mit der Regeleinrichtung (18) verbunden ist und von dieser so gesteuert oder geregelt wird, dass die Mischeinrichtung (13) das Kraftstoff-Luft-Gemisch herstellt, wenn die Fluidfördereinrichtung (6) aktiviert ist.

9. Brennkraftmaschine nach einem der Ansprüche 6 bis 8, **dadurch gekennzeichnet, dass** die Mischeinrichtung (13) zur Versorgung mit Kraftstoff mit einem Kraftstoffreservoir und/oder einer Versorgungsleitung für die Brennkraftmaschine verbunden ist.

10. Brennkraftmaschine nach einem der Ansprüche 6 bis 9, **dadurch gekennzeichnet, dass** die Mischeinrichtung (13) in der Verbindungsleitung (16) angeordnet ist und dass die Verbindung der Umgehungsleitung (14) mit der Verbindungsleitung (16) strömungsmäßig vor der Mischeinrichtung (13) angeordnet ist.

11. Brennkraftmaschine nach einem der Ansprüche 1 bis 10, **dadurch gekennzeichnet, dass** in der Umgehungsleitung (14) ein Absperrventil (17) vorgesehen ist.

12. Brennkraftmaschine nach einem der Ansprüche 1 bis 11, **dadurch gekennzeichnet, dass** der Katalysator (5) über eine - vorzugsweise elektrische - Begleitheizung verfügt.

13. Verfahren zum Vorbereiten eines Startvorgangs einer Brennkraftmaschine (1) nach einem der Ansprüche 1 bis 12, wobei der Katalysator (5) der Brennkraftmaschine (1) in einem Zustand der Brennkraftmaschine (1), in welchem keine Verbrennung und/oder Zündung durchgeführt wird, vorgewärmt und/oder warm gehalten wird, indem ein Kraftstoff-Luft-Gemisch über die Umgehungsleitung (14) zur Umgehung der zumindest einen Kolben-Zylinder-Einheit (2) mittels der Regeleinrichtung (18) geregelt durch den Katalysator (5) gefördert wird, wobei die Umgehungsleitung (14) strömungsmäßig mit der Zufuhrleitung (15) für Kraftstoff-Luft-Gemisch zur zumindest einen Kolben-Zylinder-Einheit (2) und der Verbindungsleitung (16) zwischen der zumindest einen Kolben-Zylinder-Einheit (2) und dem Katalysator (5) verbunden ist und wobei Messwerte des vor dem, nach dem oder im Katalysator (5) angeordneten Temperatursensors als rückgeführte Größen für die Regeleinrichtung (18) verwendet werden.

14. Verfahren nach Anspruch 13, **dadurch gekennzeichnet, dass** ein Motor (8) der einer Fluidfördereinrichtung (6) während eines Verbrennungsbetriebs der Brennkraftmaschine (1) generatorisch betrieben wird.

15. Verfahren nach Anspruch 13 oder 14, **dadurch gekennzeichnet, dass** das Kraftstoff-Luft-Gemisch vor dem Start und/oder intermittierend während Stillstandszeiten der Brennkraftmaschine (1) durch den Katalysator (5) gefördert wird.

## Claims

1. Internal combustion engine having
- at least one piston-cylinder unit (2),
- a turbocharger (4) having an exhaust gas turbine (3),
- a catalytic converter (5), which is connected between the at least one piston-cylinder unit (2) and the exhaust gas turbine (3), and
- a regulating device (18),
wherein the regulating device is formed to regulate a fluid conveying device (6) such that, when the internal combustion engine (1) is in a state in which no combustion and/or ignition takes place in the at least one piston-cylinder unit (2), the fluid conveying device conveys fuel-air mixture through the catalytic converter (5), **characterized in that**
- a temperature sensor is arranged before, after or in the catalytic converter (5), wherein the regulating device (18) is formed to use the measured values of the temperature sensor as feedback variables, and
- a bypass line (14) for bypassing the at least one piston-cylinder unit (2) is provided, which bypass line (14) is connected in terms of flow to a feed line (15) for air or fuel-air mixture to the at least one piston-cylinder unit (2) and a connecting line (16) between the at least one piston-cylinder unit (2) and the catalytic converter (5).

2. Internal combustion engine according to claim 1, **characterized in that** the fluid conveying device (6) is formed as a compressor (7) of the turbocharger (4), wherein a motor (8) is provided for driving the compressor (7) .

3. Internal combustion engine according to claim 2, **characterized in that** an output (11) of the motor (8) is connected to a common shaft (9) of the exhaust gas turbine (3) and the compressor (7) of the turbocharger (4).

4. Internal combustion engine according to claim 2 or 3, **characterized in that** the motor (8) is designed to be electric and preferably can be operated like a generator.

5. Internal combustion engine according to one of claims 1 to 4, **characterized in that** the fluid conveying device (6) is formed as at least one fan (12), which is preferably connected upstream of a compressor (7) of the turbocharger (4) and/or downstream of the exhaust gas turbine (3).

6. Internal combustion engine according to one of claims 1 to 5, **characterized in that** a - preferably controllable or regulatable - mixing device (13) is provided, by means of which the fuel-air mixture can be produced.

7. Internal combustion engine according to claim 6, **characterized in that** the mixing device (13) is arranged in terms of flow between the at least one piston-cylinder unit (2) and the catalytic converter (5).

8. Internal combustion engine according to claim 6 or 7, **characterized in that** the controllable or regulatable mixing device (13) is connected to the regulating device (18) and is controlled or regulated by it, such that the mixing device (13) produces the fuel-air mixture when the fluid conveying device (6) is activated.

9. Internal combustion engine according to one of claims 6 to 8, **characterized in that** for being supplied with fuel, the mixing device (13) is connected to a fuel reservoir and/or a supply line for the internal combustion engine.

10. Internal combustion engine according to one of claims 6 to 9, **characterized in that** the mixing device (13) is arranged in the connecting line (16) and that the connection of the bypass line (14) to the connecting line (16) is arranged before the mixing device (13) in terms of flow.

11. Internal combustion engine according to one of claims 1 to 10, **characterized in that** a cut-off valve (17) is provided in the bypass line (14).

12. Internal combustion engine according to one of claims 1 to 11, **characterized in that** the catalytic converter (5) has - preferably electrical - trace heating.

13. Method for preparing a startup procedure of an internal combustion engine (1) according to one of claims 1 to 12, wherein, when the internal combustion engine (1) is in a state in which no combustion and/or ignition is carried out, the catalytic converter (5) of the internal combustion engine (1) is preheated and/or kept warm in that a fuel-air mixture is conveyed through the catalytic converter (5) via the bypass line (14) for bypassing the at least one piston-cylinder unit (2) regulated by the regulating device (18), wherein the bypass line (14) is connected in terms of flow to the feed line (15) for fuel-air mixture to the at least one piston-cylinder unit (2) and the connecting line (16) between the at least one piston-cylinder unit (2) and the catalytic converter (5), and wherein measured values of the temperature sensor arranged before, after or in the catalytic converter (5) are used as feedback variables for the regulating device (18).

14. Method according to claim 13, **characterized in that** a motor (8) of the fluid conveying device (6) is operated like a generator during a combustion operation of the internal combustion engine (1).

15. Method according to claim 13 or 14, **characterized in that** the fuel-air mixture is conveyed through the catalytic converter (5) before the start and/or intermittently during idle times of the internal combustion engine (1).

## Revendications

1. Moteur à combustion interne avec
- au moins une unité de cylindre-piston (2),
- un turbocompresseur (4) présentant une turbine à gaz d'échappement (3),
- un catalyseur (5), lequel est monté entre l'au moins une unité de cylindre-piston (2) et la turbine à gaz d'échappement (3), et
- un dispositif de régulation (18),
dans lequel le dispositif de régulation est réalisé pour réguler un dispositif de refoulement de fluide (6) de telle sorte que le dispositif de refoulement de fluide refoule un mélange d'air-carburant à travers le catalyseur (5) dans un état du moteur à combustion interne (1), dans lequel aucune combustion et/ou aucun allumage n'ont lieu dans l'au moins une unité de cylindre-piston (2), **caractérisé en ce que**
- un capteur de température est disposé avant, après ou dans le catalyseur (5), dans lequel le dispositif de régulation (18) est réalisé pour utiliser les valeurs de mesure du capteur de température en tant que grandeurs renvoyées, et
- une conduite de dérivation (14) est prévue pour dériver l'au moins une unité de cylindre-piston (2), laquelle conduite de dérivation (14) est raccordée fluidiquement à une conduite d'arrivée (15) pour l'air ou le mélange d'air-carburant vers l'au moins une unité de cylindre-piston (2) et une conduite de raccordement (16) entre l'au moins une unité de cylindre-piston (2) et le catalyseur (5).

2. Moteur à combustion interne selon la revendication 1, **caractérisée en ce que** le dispositif de refoulement de fluide (6) est réalisé en tant qu'un compresseur (7) du turbocompresseur (4), dans lequel un moteur (8) est prévu pour entraîner le compresseur (7).

3. Moteur à combustion interne selon la revendication 2, **caractérisé en ce qu'**une sortie (11) du moteur (8) est raccordée à un arbre (9) commun de la turbine à gaz d'échappement (3) et du compresseur (7) du turbocompresseur (4) .

4. Moteur à combustion interne selon la revendication 2 ou 3, **caractérisé en ce que** le moteur (8) est réalisé de manière électrique et peut fonctionner de préférence en générateur.

5. Moteur à combustion interne selon l'une quelconque des revendications 1 à 4, **caractérisé en ce que** le système de refoulement de fluide (6) est réalisé en tant qu'au moins une soufflante (12), laquelle est installée de préférence en amont d'un compresseur (7) du turbocompresseur (4) et/ou est installée en aval de la turbine à gaz d'échappement (3).

6. Moteur à combustion interne selon l'une quelconque des revendications 1 à 5, **caractérisé en ce qu'**est prévu un dispositif de mélange (13) - de préférence pouvant être commandé ou régulé -, au moyen duquel le mélange d'air-carburant peut être produit.

7. Moteur à combustion interne selon la revendication 6, **caractérisé en ce que** le dispositif de mélange (13) est disposé fluidiquement entre l'au moins une unité de cylindre-piston (2) et le catalyseur (5).

8. Moteur à combustion interne selon la revendication 6 ou 7, **caractérisé en ce que** le dispositif de mélange (13) pouvant être commandé ou régulé est raccordé au dispositif de régulation (18) et est commandé ou régulé par celui-ci de telle sorte que le dispositif de mélange (13) produit le mélange d'air-carburant lorsque le dispositif de refoulement de fluide (6) est activé.

9. Moteur à combustion interne selon l'une quelconque des revendications 6 à 8, **caractérisé en ce que** le dispositif de mélange (13) est raccordé à un réservoir de carburant et/ou à une conduite d'alimentation pour le moteur à combustion interne pour l'alimentation en carburant.

10. Moteur à combustion interne selon l'une quelconque des revendications 6 à 9, **caractérisé en ce que** le dispositif de mélange (13) est disposé dans la conduite de raccordement (16), et que le raccordement de la conduite de dérivation (14) à la conduite de raccordement (16) est disposé fluidiquement devant le dispositif de mélange (13).

11. Moteur à combustion interne selon l'une quelconque des revendications 1 à 10, **caractérisé en ce qu'**une soupape d'arrêt (17) est prévue dans la conduite de dérivation (14).

12. Moteur à combustion interne selon l'une quelconque des revendications 1 à 11, **caractérisé en ce que** le catalyseur (5) dispose d'un chauffage d'accompagnement - de préférence électrique.

13. Procédé destiné à préparer une opération de démarrage d'un moteur à combustion interne (1) selon l'une quelconque des revendications 1 à 12, dans lequel le catalyseur (5) du moteur à combustion interne (1) est préchauffé et/ou est maintenu chaud dans un état du moteur à combustion interne (1), dans lequel aucune combustion et/ou aucun allumage ne sont effectués, en ce qu'un mélange d'air-carburant est refoulé à travers le catalyseur (5) de manière régulée au moyen du dispositif de régulation (18) par l'intermédiaire de la conduite de dérivation (14) pour la dérivation de l'au moins une unité de cylindre-piston (2), dans lequel la conduite de dérivation (14) est raccordée fluidiquement à la conduite d'arrivée (15) pour le mélange d'air-carburant vers l'au moins une unité de cylindre-piston (2) et la conduite de raccordement (16) entre l'au moins une unité de cylindre-piston (2) et le catalyseur (5), et dans lequel des valeurs de mesure du capteur de température disposé avant, après ou dans le catalyseur (5) sont utilisées en tant que grandeurs renvoyées pour le dispositif de régulation (18).

14. Procédé selon la revendication 13, **caractérisé en ce qu'**un moteur (8) du dispositif de refoulement de fluide (6) fonctionne en générateur pendant un mode de fonctionnement de combustion du moteur à combustion interne (1).

15. Procédé selon la revendication 13 ou 14, **caractérisé en ce que** le mélange d'air-carburant est refoulé à travers le catalyseur (5) avant le démarrage et/ou par intermittence pendant des périodes d'arrêt du moteur à combustion interne (1) .
